# FASCICULE DE BREVET EUROPEEN

(11) **EP 3 821 358 B1**
(45) Date de publication et mention de la délivrance du brevet: **02.08.2023**
(21) Numéro de dépôt: 19745708.8
(22) Date de dépôt: 24.06.2019
(51) Int. Cl.: G06F 21/55

(54) **PROCÉDÉ ET DISPOSITIF DE DÉTECTION DE COMPROMISSION D'UNE CIBLE PAR UNE ATTAQUE LATÉRALE**
VERFAHREN UND VORRICHTUNG ZUR ERKENNUNG EINER BEEINTRÄCHTIGUNG EINES ZIELES DURCH EINEN SEITENANGRIFF
METHOD AND DEVICE FOR DETECTING COMPROMISE OF A TARGET BY A SIDE ATTACK

(30) Priorité: 11.07.2018 FR 1856373
(43) Date de publication de la demande: 19.05.2021
(73) Titulaire: Wallix, 75008 Paris (FR)
(72) Inventeur: TAN, Meng, 92120 MONTROUGE (FR); ADDA, Serge, 92160 Antony (FR)
(74) Mandataire: IP Trust
(86) Numéro de dépôt international: PCT/FR2019/051544
(87) Numéro de publication internationale: WO 2020/012083

(56) Documents cités:
- US-A1- 2005 033 777
- US-B1- 9 386 019
- Daniel Petri: "Secure Remote Access - Configuring and Session Recording", , 7 janvier 2009 (2009-01-07), XP002791128, Extrait de l'Internet: URL:https://www.petri.com/creating-secure- auditable-remote-access-management-environ ment-windows-server-security [extrait le 2019-05-08]
- Kevin Donovan: "10 Ways ObserveIT Goes Beyond Session Recording", , 30 août 2017 (2017-08-30), XP002791129, Extrait de l'Internet: URL:https://www.observeit.com/blog/10-ways -observeit-goes-beyond-session-recording/ [extrait le 2019-05-09]
- SHI-HAI HUANG ET AL: "Proxy-Based Security Audit System for Remote Desktop Access", COMPUTER COMMUNICATIONS AND NETWORKS, 2009. ICCCN 2009. PROCEEDINGS OF 18TH INTERNATONAL CONFERENCE ON, IEEE, PISCATAWAY, NJ, USA, 3 août 2009 (2009-08-03), pages 1-5, XP031527801, ISBN: 978-1-4244-4581-3

## Description

### Domaine technique

L'invention se situe dans le domaine de l'affichage sur un dispositif d'affichage d'un terminal local d'un objet graphique généré par un serveur distant. Plus précisément, l'invention s'applique à un terminal local et un serveur distant mettant en oeuvre un protocole de bureau à distance, dans le contexte d'une session contrôlée par une passerelle mandataire. Elle s'applique notamment au protocole de bureau à distance connu sous le nom de RDP, pour l'anglais *Remote Desktop Protocol,* ou encore au protocole SSH, pour l'anglais *Secure SHell.*

### État de la technique antérieure

On connaît en particulier dans l'état de la technique un système et procédé d'authentification sécurisée basés sur une passerelle mandataire facilitant l'amélioration de la sécurité d'une authentification entre un client et une cible au moyen d'un module d'authentification sur une passerelle mandataire. Le client peut se connecter à la passerelle mandataire au moyen d'un protocole natif et fournit des informations d'identification d'utilisateur à la passerelle mandataire.

Il est inutile, pour l'utilisateur, d'être en possession des informations d'identification d'accès de cible. La passerelle mandataire peut éventuellement être connectée à un système de gestion d'accès privilégié qui peut fournir et/ou stocker des informations d'identification d'accès de cible. Les informations d'identification d'accès de cible fournies par la passerelle mandataire facilitent la prévention contre une faille dans la sécurité du client qui expose les informations d'identification d'accès de cible.

Toutefois, il peut arriver que pour rendre un service à utilisateur, une connexion à la cible avec un accès privilégié soit nécessaire. Bien entendu, la cible peut alors se retrouver exposée à une attaque de sécurité de type latéral, par création d'un compte à privilège pour le compte de l'utilisateur.
Daniel Petri dans "Secure Remote Access - Configuring and Session Recording",, 7 janvier 2009 (2009-01-07) décrit la possibilité d'enregistrer les actions et interactions d'un utilisateur avec un serveur et de rechercher ultérieurement dans les enregistrements pour des informations qui pourraient indiquer une attaque.

Aussi, il existe un besoin de mieux sécuriser les cibles pouvant être attaquées par des attaques de sécurité de type latéral.

### Exposé de l'invention

Un but de l'invention est notamment de remédier à tout ou partie des inconvénients précités.

Une idée qui est à la base de l'invention est de s'assurer de l'intégrité au cours du temps de différents fichiers de configuration de la cible.

À cet effet, il est proposé, selon un premier aspect de l'invention, un procédé de détection d'une attaque latérale d'une cible par un utilisateur comportant :
- une étape d'enregistrement de données relatives à un ou plusieurs fichiers, dit sensible, lesdits fichiers sensibles étant des fichiers de configuration de la cible,
- une étape de connexion primaire de l'utilisateur sur une passerelle mandataire pour établir une connexion secondaire de la passerelle mandataire sur la cible,
- ultérieurement à la fin d'une session utilisateur, une étape de téléchargement final de données relatives au fichier sensible courant sur la cible,
- une étape de vérification de l'intégrité des fichiers sensibles, ultérieurement à l'étape de connexion secondaire de la passerelle mandataire sur la cible et,
- lorsque l'intégrité d'au moins un fichier sensible est déterminée comme compromise par l'étape de vérification de l'intégrité du fichier sensible, une étape de détection d'une attaque latérale de la cible par l'utilisateur.

Aussi, il n'est pas possible de réussir une attaque latérale, car elle est détectée et une réponse adéquate peut y être apportée.

Les données enregistrées relatives aux fichiers sensibles peuvent être enregistrées sur la passerelle mandataire.

Avantageusement, le procédé selon l'invention peut comporter une étape de copie du fichier sensible dans un fichier, dit intègre, préalablement à l'étape de connexion secondaire.

Selon une première possibilité, lorsqu'une attaque latérale de la cible par l'utilisateur est détectée, les fichiers sensibles sont modifiés pour être remplacés par des fichiers intègres.

Selon une deuxième possibilité, éventuellement combinable avec la première, lorsqu'une possibilité d'attaque latérale de la cible par l'utilisateur est détectée, une notification (par email ou SMS) est adressée à un administrateur de la passerelle mandataire et/ou de la cible. De préférence, l'utilisateur connecté à la cible n'est pas averti de cette notification.

L'étape de vérification de l'intégrité des fichiers sensibles peut comporter une étape de comparaison de données, dites courantes, relatives au fichier sensible qui sont déterminées à partir du fichier sensible, dit courant, et des données enregistrées relatives au fichier sensible.

Selon un premier mode de réalisation, les données enregistrées relatives au fichier sensible comportent le fichier sensible lui-même. Aussi, il est possible de vérifier le contenu du fichier par rapport à un fichier intègre.

Selon un deuxième mode de réalisation, les données enregistrées relatives aux fichiers sensibles peuvent comporter des attributs des fichiers sensibles. Ces attributs sont par exemple la taille, le propriétaire, l'i-node et la date du fichier. Aussi, il est possible de ne vérifier que les attributs enregistrés aux attributs d'un fichier intègre.

Selon un troisième mode de réalisation, les données enregistrées relatives au fichier sensible comportent une signature numérique du fichier sensible. Aussi, il est possible de ne vérifier que la signature enregistrée par rapport à celle d'un fichier intègre.

Selon une possibilité, l'étape d'enregistrement de données relatives aux fichiers sensibles est réalisée ultérieurement à l'étape de connexion primaire de l'utilisateur et préalablement à l'étape de vérification de l'intégrité des fichiers sensibles.

L'étape d'enregistrement de données relatives au fichier sensible peut être réalisée immédiatement après l'étape de connexion secondaire et avant qu'une commande générée par l'utilisateur ne puisse être exécutée par la cible. Aussi, il est possible de connaître l'état des fichiers sensibles préalablement à toute action de la part de l'utilisateur sur lesdits fichiers sensibles.

À titre d'exemple, l'étape de vérification de l'intégrité du fichier sensible peut être réalisée par la passerelle mandataire, ultérieurement à une étape de téléchargement sur la passerelle mandataire de données, dites courantes, relatives au fichier sensible, dit courant.

Toujours à titre d'exemple, l'étape de vérification de l'intégrité du fichier sensible peut être réalisée par la cible.

Selon un mode de réalisation, les fichiers sensibles sont générés par des appels à des interfaces de programmation, en anglais API pour *application programming interface* - cas des systèmes Windows. Ces appels peuvent se faire au travers d'une sonde de session déployée sur la cible au début de la connexion.

Le procédé selon la revendication peut avantageusement comporter une étape de fermeture de la connexion secondaire, auquel cas l'étape de vérification de l'intégrité du fichier sensible est réalisée préalablement à l'étape de fermeture de la connexion secondaire.

Selon un deuxième aspect de l'invention, il est proposé une passerelle mandataire pour la détection d'une attaque latérale d'une cible par un utilisateur, comportant des moyens de traitement de données configurés pour :
- enregistrer des données relatives à un fichier, dit sensible, ledit fichier sensible étant un fichier de configuration de la cible,
- établir une connexion primaire de l'utilisateur sur la passerelle mandataire pour établir une connexion secondaire de ladite passerelle mandataire sur la cible,
- ultérieurement à la fin d'une session utilisateur, une étape de téléchargement final de données relatives au fichier sensible courant sur la cible,
- vérifier l'intégrité du fichier sensible, ultérieurement à l'étape de connexion secondaire de la passerelle mandataire sur la cible et,
- lorsque l'intégrité du fichier sensible est déterminée comme compromise par l'étape de vérification de l'intégrité du fichier sensible, détecter une attaque latérale de la cible par l'utilisateur.

Selon un autre aspect de l'invention, il est proposé un produit programme d'ordinateur, téléchargeable depuis un réseau de communication et/ou stocké sur un support lisible par ordinateur et/ou exécutable par un microprocesseur, et chargeable dans une mémoire interne d'une unité de calcul, comportant des instructions de code de programme qui, lorsqu'elles sont exécutées par l'unité de calcul, mettent en oeuvre les étapes d'un procédé selon le premier aspect de l'invention, ou l'un ou plusieurs de ses perfectionnements.

### Description des figures

D'autres avantages et particularités de l'invention apparaîtront à la lecture de la description détaillée de mises en oeuvre et de modes de réalisation nullement limitatifs, au regard de dessins annexés sur lesquels :
- la figure 1 représente schématiquement une attaque latérale d'une cible selon l'art antérieur,
- la figure 2 illustre le contenu de deux fichiers d'une cible, avant et après la connexion de l'attaquant sur la cible via une passerelle mandataire,
- la figure 3 illustre un diagramme d'échanges de données pour parvenir à la création de l'utilisateur privilégie de la figure 2,
- La figure 4 illustre un diagramme d'échanges de données dérivant de la mise en oeuvre d'un procédé selon un premier mode de réalisation de l'invention.

### Description de modes de réalisation

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

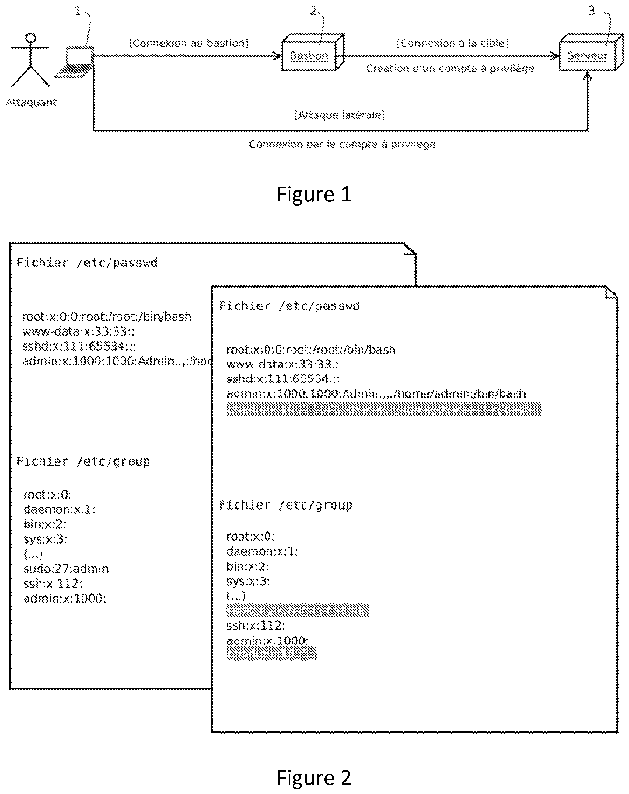

La figure 1 représente schématiquement une attaque latérale d'une cible selon l'art antérieur.

Un attaquant A établi une connexion légitime entre un terminal 1 et une passerelle mandataire 2, aussi appelée « bastion ». Comme suite de cette connexion légitime, le bastion établit une connexion légitime entre lui-même et un serveur 3.

Par suite, l'attaquant modifie un ou plusieurs fichiers sur le serveur 3, dans le but d'établir plus tard, et sans passer par le bastion, une connexion par un compte à privilège entre l'attaquant et le serveur.

Ceci est illustré par la figure 2, qui liste le contenu de deux fichiers du serveur, avant et après la connexion de l'attaquant sur le serveur 3 via la passerelle mandataire 2.

Après la connexion de l'attaquant, le fichier nommé « /etc/passwd » comprend une ligne de plus accréditant un nouvel utilisateur « charlie » et un nouveau groupe « 1001 ». On remarque également que l'utilisateur « charlie » est ajouté à la liste du groupe « sudo », dans le fichier « /etc/group ». Aussi, l'utilisateur « charlie » peut, après l'attaque latérale, se connecter directement sur le serveur 3 et exécuter des actions avec des autorisations d'administrateur.

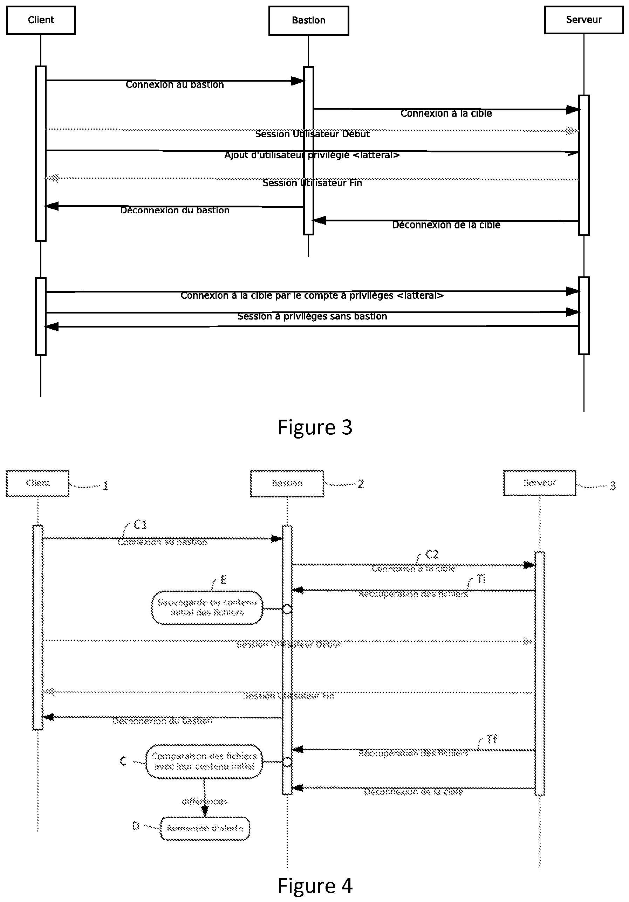

La figure 3 illustre un diagramme d'échanges de données pour parvenir à la création de l'utilisateur privilégie de la figure 2.

Selon un mode de réalisation d'un procédé selon l'invention conduisant au diagramme d'échanges de données illustré par la figure 4, le procédé comporte aussi une étape de connexion primaire C1 de l'utilisateur sur une passerelle mandataire 2 pour établir une connexion secondaire C2 de la passerelle mandataire 2 sur le serveur cible 3.

Le procédé comporte :
- une étape de téléchargement initial Ti de données relatives à un fichier, dit sensible, ledit fichier sensible étant un fichier de configuration de la cible 3, et
- une étape d'enregistrement E des données téléchargées sur la passerelle mandataire 2,
- ultérieurement à la fin d'une session utilisateur, une étape de téléchargement final Tf de données relatives au fichier sensible courant sur la cible 3,
- une étape de vérification C de l'intégrité du fichier sensible, ultérieurement à l'étape de connexion secondaire de la passerelle mandataire sur la cible et,
- lorsque l'intégrité du fichier sensible est déterminée comme compromise par l'étape de vérification de l'intégrité du fichier sensible, une étape de détection D d'une attaque latérale de la cible par l'utilisateur. L'étape de détection D selon le mode de réalisation comporte une remontée d'alerte à un administrateur de la cible 3.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Procédé de détection d'une attaque latérale d'une cible (3) par un utilisateur comportant :
- une étape d'enregistrement (E) de données relatives à un fichier, dit sensible, ledit fichier sensible étant un fichier de configuration de la cible,
- une étape de connexion primaire (C1) de l'utilisateur sur une passerelle mandataire (2) pour établir une connexion secondaire (C2) de la passerelle mandataire sur la cible,
- ultérieurement à la fin d'une session utilisateur, une étape de téléchargement final (Tf) de données relatives au fichier sensible courant sur la cible (page 5, ligne 21,22) ,
- une étape de vérification (C) de l'intégrité du fichier sensible travers la comparaison de données, dites courantes, relatives au fichier sensible qui sont déterminées à partir du fichier sensible, dit courant, et des données enregistrées relatives au fichier sensible. ultérieurement à l'étape de connexion secondaire de la passerelle mandataire sur la cible et,
- lorsque l'intégrité du fichier sensible est déterminée comme compromise par l'étape de vérification de l'intégrité du fichier sensible, une étape de détection (D) d'une attaque latérale de la cible par l'utilisateur.

2. Procédé selon la revendication précédente, comportant une étape de copie (Ti) du fichier sensible dans un fichier, dit intègre, préalablement à l'étape de connexion secondaire (C2).

3. Procédé selon la revendication précédente, dans lequel, lorsqu'une attaque latérale de la cible par l'utilisateur est détectée, le fichier sensible est modifié pour être remplacé par un fichier intègre.

4. Procédé selon l'une quelconque des revendications précédentes, dans lequel lorsqu'une attaque latérale de la cible par l'utilisateur est détectée, une notification est adressée à un administrateur de la passerelle mandataire (2) et/ou de la cible (3).

5. Procédé selon l'une quelconque des revendications précédentes, dans lequel les données enregistrées relatives au fichier sensible comporte le fichier sensible lui-même.

6. Procédé selon l'une quelconque des revendications précédentes, dans lequel les données enregistrées relatives au fichier sensible comportent des attributs du fichier sensible.

7. Procédé selon l'une quelconque des revendications précédentes, dans lequel les données enregistrées relatives au fichier sensible comportent une signature numérique du fichier sensible.

8. Procédé selon l'une quelconque des revendications précédentes, dans lequel l'étape d'enregistrement (Ti) de données relatives au fichier sensible est réalisée ultérieurement à l'étape de connexion primaire (C1) de l'utilisateur et préalablement à l'étape de vérification (C) de l'intégrité du fichier sensible.

9. Procédé selon la revendication précédente, dans lequel l'étape d'enregistrement (Ti) de données relatives au fichier sensible est réalisée immédiatement après l'étape de connexion secondaire (C2).

10. Procédé selon l'une quelconque des revendications précédentes, comportant en outre une étape de fermeture de la connexion secondaire et dans lequel l'étape de vérification (C) de l'intégrité du fichier sensible est réalisée préalablement à l'étape de fermeture de la connexion secondaire.

11. Procédé selon l'une quelconque des revendications précédentes, dans lequel l'étape de vérification (C) de l'intégrité du fichier sensible est réalisée par la passerelle mandataire (2), ultérieurement à une étape de téléchargement (Tf) sur la passerelle mandataires de données, dites courantes, relatives au fichier sensible, dit courant.

12. Passerelle mandataire (2) pour la détection d'une attaque latérale d'une cible par un utilisateur, comportant des moyens de traitement de données configurés pour :
- enregistrer des données relatives à un fichier, dit sensible, ledit fichier sensible étant un fichier de configuration de la cible,
- établir une connexion primaire de l'utilisateur sur la passerelle mandataire pour établir une connexion secondaire de ladite passerelle mandataire sur la cible,
- ultérieurement à la fin d'une session utilisateur, une étape de téléchargement final (Tf) de données relatives au fichier sensible courant sur la cible,
- vérifier l'intégrité du fichier sensible à travers la comparaison de données, dites courantes, relatives au fichier sensible qui sont déterminées à partir du fichier sensible, dit courant, et des données enregistrées relatives au fichier sensible. ultérieurement à l'étape de connexion
secondaire de la passerelle mandataire sur la cible et,
- lorsque l'intégrité du fichier sensible est déterminée comme compromise par l'étape de vérification de l'intégrité du fichier sensible, détecter une attaque latérale de la cible par l'utilisateur.

13. Produit programme d'ordinateur, téléchargeable depuis un réseau de communication et/ou stocké sur un support lisible par ordinateur et/ou exécutable par un microprocesseur, et chargeable dans une mémoire interne d'une unité de calcul, **caractérisé en ce qu'**il comporte des instructions de code de programme qui, lorsqu'elles sont exécutées par l'unité de calcul, mettent en oeuvre les étapes d'un procédé selon l'une quelconque des revendications précédentes de procédé de détection.

## Patentansprüche

1. Verfahren zum Erkennen eines seitlichen Angriffs eines Ziels (3) durch einen Benutzer, umfassend:
- einen Schritt eines Speicherns (E) von Daten bezüglich einer sensiblen Datei, wobei die sensible Datei eine Konfigurationsdatei des Ziels ist,
- einen Schritt einer Primärverbindung (C1) des Benutzers auf einem Proxy-Gateway (2), um eine Sekundärverbindung (C2) des Proxy-Gateways auf dem Ziel herzustellen,
- nach dem Abschluss einer Benutzersitzung, einen Schritt eines abschließenden Herunterladens (Tf) von Daten bezüglich der aktuellen sensiblen Datei auf das Ziel (Seite 5, Linie 21, 22),
- einen Schritt eines Verifizierens (C) der Integrität der sensiblen Datei durch den Vergleich der aktuellen Daten bezüglich der sensiblen Datei, die aus der aktuellen sensiblen Datei bestimmt werden, und der gespeicherten Daten bezüglich der sensiblen Datei, nach dem Schritt der Sekundärverbindung des Proxy-Gateways auf dem Ziel und,
- wenn die Integrität der sensiblen Datei durch den Schritt des Verifizierens der Integrität der sensiblen Datei als beeinträchtigt bestimmt wird, einen Schritt des Erkennens (D) eines seitlichen Angriffs eines Ziels durch den Benutzer.

2. Verfahren nach dem vorstehenden Anspruch, umfassend einen Schritt eines Kopierens (Ti) der sensiblen Datei in eine integre Datei, vor dem Schritt der Sekundärverbindung (C2).

3. Verfahren nach dem vorstehenden Anspruch, wobei, wenn ein seitlicher Angriff des Ziels durch den Benutzer erkannt wird, die sensible Datei modifiziert wird, um durch eine integre Datei ersetzt zu werden.

4. Verfahren nach einem der vorstehenden Ansprüche, wobei, wenn ein seitlicher Angriff des Ziels durch den Benutzer erkannt wird, eine Nachricht an einen Administrator des Proxy-Gateways (2) und/oder des Ziels (3) geschickt wird.

5. Verfahren nach einem der vorstehenden Ansprüche, wobei die gespeicherten Daten bezüglich der sensiblen Datei die sensible Datei selbst umfassen.

6. Verfahren nach einem der vorstehenden Ansprüche, wobei die gespeicherten Daten bezüglich der sensiblen Datei Attribute der sensiblen Datei umfassen.

7. Verfahren nach einem der vorstehenden Ansprüche, wobei die gespeicherten Daten bezüglich der sensiblen Datei eine digitale Signatur der sensiblen Datei umfassen.

8. Verfahren nach einem der vorstehenden Ansprüche, wobei der Schritt des Speicherns (Ti) von Daten bezüglich der sensiblen Datei nach dem Schritt der Primärverbindung (C1) des Benutzers und vor dem Schritt des Verifizierens (C) der Integrität der sensiblen Datei erfolgt.

9. Verfahren nach dem vorstehenden Anspruch, wobei der Schritt des Speicherns (Ti) von Daten bezüglich der sensiblen Datei unverzüglich nach dem Schritt der Sekundärverbindung (C2) erfolgt.

10. Verfahren nach einem der vorstehenden Ansprüche, umfassend ferner einen Schritt eines Beendens der Sekundärverbindung und wobei der Schritt des Verifizierens (C) der Integrität der sensiblen Datei vor dem Schritt des Beendens der Sekundärverbindung erfolgt.

11. Verfahren nach einem der vorstehenden Ansprüche, wobei der Schritt des Verifizierens (C) der Integrität der sensiblen Datei durch den Proxy-Gateway (2) erfolgt, nach einem Schritt des Herunterladens (Tf) von aktuellen Daten bezüglich der aktuellen sensiblen Datei auf den Proxy-Gateway.

12. Proxy-Gateway (2) zum Erkennen eines seitlichen Angriffs eines Ziels durch einen Benutzer, umfassend Verarbeitungsmöglichkeiten der Daten, die konfiguriert sind zum:
- Speichern der Daten bezüglich einer sensiblen Datei, wobei die sensible Datei eine Konfigurationsdatei des Ziels ist,
- Herstellen einer Primärverbindung des Benutzers auf dem Proxy-Gateway, um eine Sekundärverbindung des Proxy-Gateways auf dem Ziel herzustellen,
- nach dem Abschluss einer Benutzersitzung, einen Schritt des abschließenden Herunterladens (Tf) von Daten bezüglich der aktuellen sensiblen Datei auf das Ziel,
- Verifizieren der Integrität der sensiblen Datei durch den Vergleich der aktuellen Daten bezüglich der sensiblen Datei, die aus der aktuellen sensiblen Datei bestimmt werden, und der gespeicherten Daten bezüglich der sensiblen Datei, nach dem Schritt der Sekundärverbindung des Proxy-Gateways auf dem Ziel und,
- wenn die Integrität der sensiblen Datei durch den Schritt des Verifizierens der Integrität der sensiblen Datei als beeinträchtigt bestimmt wird, Erkennen eines seitlichen Angriffs des Ziels durch den Benutzer.

13. Computerprogrammprodukt, das von einem Kommunikationsnetz herunterladbar ist und/oder auf einem computerlesbaren Medium gespeichert ist und/oder durch einen Mikroprozessor ausführbar ist, und in einen internen Speicher einer Recheneinheit ladbar ist, **dadurch gekennzeichnet, dass** es Anweisungen von dem Programmcode umfasst, die, wenn sie durch die Recheneinheit ausgeführt werden, die Schritte eines Verfahrens nach einem der vorstehenden Ansprüche des Verfahrens zum Erkennen durchführt.

## Claims

1. Method for detecting a lateral attack on a target (3) by a user, comprising:
- a step of recording (E) data relating to a file, referred to as a sensitive file, said sensitive file being a configuration file of the target,
- a step of establishing a primary connection (C1) of the user to a proxy gateway (2) in order to establish a secondary connection (C2) of the proxy gateway to the target,
- subsequently, at the end of a user session, a step of making a final download (Tf) of data relating to the current sensitive file on the target (page 5, lines 21 and 22),
- a step of verifying (C) the integrity of the sensitive file by comparing data, referred to as current data, relating to the sensitive file, which are determined from the sensitive file, referred to as a current file, and recorded data relating to the sensitive file, subsequently to the step of establishing a secondary connection of the proxy gateway to the target, and
- when the integrity of the sensitive file is determined as compromised by the step of verifying the integrity of the sensitive file, a step of detecting (D) a lateral attack of the target by the user.

2. Method according to the preceding claim, comprising a step of copying (Ti) the sensitive file into a file, referred to as an integrity file, prior to the secondary connection step (C2).

3. Method according to the preceding claim, wherein, when a lateral attack of the target by the user is detected, the sensitive file is modified to be replaced by an integrity file.

4. Method according to any of the preceding claims, wherein, when a lateral attack of the target by the user is detected, a notification is sent to an administrator of the proxy gateway (2) and/or of the target (3).

5. Method according to any of the preceding claims, wherein the recorded data relating to the sensitive file comprise the sensitive file itself.

6. Method according to any of the preceding claims, wherein the recorded data relating to the sensitive file comprise attributes of the sensitive file.

7. Method according to any of the preceding claims, wherein the recorded data relating to the sensitive file comprise a digital signature of the sensitive file.

8. Method according to any of the preceding claims, wherein the step of recording (Ti) data relating to the sensitive file is carried out subsequently to the step of establishing a primary connection (C1) of the user and prior to the step of verifying (C) the integrity of the sensitive file.

9. Method according to the preceding claim, wherein the step of recording (Ti) data relating to the sensitive file is carried out immediately after the step of establishing a secondary connection (C2).

10. Method according to any of the preceding claims, further comprising a step of closing the secondary connection, and wherein the step of verifying (C) the integrity of the sensitive file is carried out prior to the step of closing the secondary connection.

11. Method according to any of the preceding claims, wherein the step of verifying (C) the integrity of the sensitive file is carried out by the proxy gateway (2), subsequently to a step of downloading (Tf) data, referred to as current data, relating to the sensitive file, referred to as a current file, on the proxy gateway.

12. Proxy gateway (2) for detecting a lateral attack on a target by a user, comprising data processing means which are configured:
- to record data relating to a file, referred to as a sensitive file, said sensitive file being a configuration file of the target,
- to establish a primary connection of the user to the proxy gateway in order to establish a secondary connection of said proxy gateway to the target,
- subsequently, at the end of a user session, a step of making a final download (Tf) of data relating to the current sensitive file on the target,
- to verify the integrity of the sensitive file by comparing data, referred to as current data, relating to the sensitive file, which are determined from the sensitive file, referred to as a current file, and recorded data relating to the sensitive file, subsequently to the step of establishing a secondary connection of the proxy gateway to the target, and
- when the integrity of the sensitive file is determined as compromised by the step of verifying the integrity of the sensitive file, to detect a lateral attack of the target by the user.

13. Computer program product which can be downloaded from a communication network and/or be stored on a computer-readable medium and/or can be executed by a microprocessor and can be loaded into an internal memory of a computing unit, **characterized in that** it comprises program code instructions which, when they are executed by the computing unit, perform the steps of a method according to any of the preceding detection method claims.
